# EUROPEAN PATENT SPECIFICATION

(11) **EP 0 996 274 B1**
(45) Date of publication and mention of the grant of the patent: **16.06.2004**
(21) Application number: 99119927.4
(22) Date of filing: 11.10.1999
(51) Int. Cl.: H04M 11/02

(54) **Improved building intercommunication system with digital calling**
Verbesserte Gegensprechanlage für Gebäude mit digitalem Anruf
Système d'intercommunication en bâtiment amélioré avec appeler numérique

(30) Priority: 23.10.1998 IT TO980901
(43) Date of publication of application: 26.04.2000
(73) Proprietor: Urmet Domus S.p.A., 10154 Torino (IT)
(72) Inventor: Mondardini, Massimo, 10123 Torino (IT)
(74) Representative: Modiano, Guido, Dr.-Ing.

(56) References cited:
- EP-A- 0 032 982
- EP-A- 0 818 914
- EP-A- 0 849 913
- DE-A- 19 548 744

## Description

The present invention relates to an improved building intercommunication system of the type with digital calling, wherein the expression "building intercommunication system" describes a signaling and answering system for domestic use, comprising one or more outdoor stations for calling, and selectively establishing voice communication with, a plurality of indoor stations or user intercom sets and for the activation, on the part of said indoor stations, of an electric lock (so-called electric door opener).

More particularly, the present invention relates to a building intercommunication system as specified, of the type in which the selection of the individual indoor stations and the activation of the electric lock are performed by means of digitally coded pulses and wherein the selection signal is decoded by individual call detectors, each of which is associated with a corresponding indoor station or user intercom set.

Building intercommunication systems of this type are known for example from DE-195 48 744; in such systems, the outdoor station or stations and the indoor stations or user intercom sets are arranged along a common bus with two conductors, which is used both for transmitting digital signals related to selection and to the electric gatekeeper function and for transmitting the audio signal related to the conversation.

These conventional building intercommunication systems, although being efficient and relatively simple, have drawbacks; the greatest drawback is the fact that the electrical connection provided by means of said bus introduces considerable attenuation in the transmission of the selection and audio signals, so that in general the architecture of the systems is rigid and scarcely expandable or not expandable at all, in terms of outdoor stations and indoor stations or user intercom sets as well as in terms of physical location of the various components of the system.

European Patent application no. EP0818914 discloses a building intercommunication system in which an outdoor station and a plurality of indoor stations are connected to each other by means of a line having two wires and with the interposition of junction boxes, each box handling a corresponding group of intercom sets.

European Patent application no. EP0032982 discloses a domestic system for information transmission comprising a plurality of subscriber's sets interconnected without central exchange.

European Patent application no. EP0849913 discloses a data communication system comprising two buses and connection means for converting a packet format of an asynchronous transmission mode from one bus to the other and vice versa.

The aim of the present invention is to eliminate this drawback and therefore to provide an improved building intercommunication system which can be expanded in any manner according to operating requirements and as said requirements change, for example by adding to a first set of outdoor and indoor stations, planned during the design of a building, additional sets of outdoor and/or indoor stations with different physical locations, required by subsequent extensions or partitionings of the building or by the subsequent construction of utilities and other structures related to said building.

Within the scope of this aim, an object of the present invention is to provide an improved building intercommunication system which, in case of localized malfunctions, allows to selectively disconnect individual blocks of user intercom sets without compromising the entire functionality of the system.

Another important object of the present invention is to provide a building intercommunication system of the specified type, with a highly simplified programming system and requiring the intervention of a single operator, who provides a correlation between the outdoor station and the indoor stations by means of correlation data generated by the outdoor station and stored in the individual indoor stations.

According to the present invention, this aim, these important objects and others which will become apparent from the following detailed description are achieved by an improved building intercommunication system having the specific characteristics stated in the appended claims.

Substantially, the invention is based on the concept of using two buses as a line for connection between the outdoor stations and the indoor stations, each bus comprising two non-polarized conductors, a plurality of outdoor stations branching off from one of said buses, a plurality of indoor stations branching off from the other one of said buses; and in interposing between said buses a coupling circuit component, to which both buses are connected, said coupling component being provided with means for separately supplying said buses, with electronic means adapted to receive and retransmit in both directions, from and onto said buses, frames of digital signals for selecting, and for answering from, the individual indoor stations; and adapted to enable an audio circuit which resides within the coupling component and allows the bidirectional travel of the audio signals from one bus to the other and accordingly from the calling outdoor station to the called indoor station and vice versa.

Further characteristics and advantages of the improved building intercommunication system according to the present invention will become apparent from the following detailed description and with reference to the accompanying drawings, given by way of non-limitative example, wherein:
Figure 1 is a general diagram of the system;

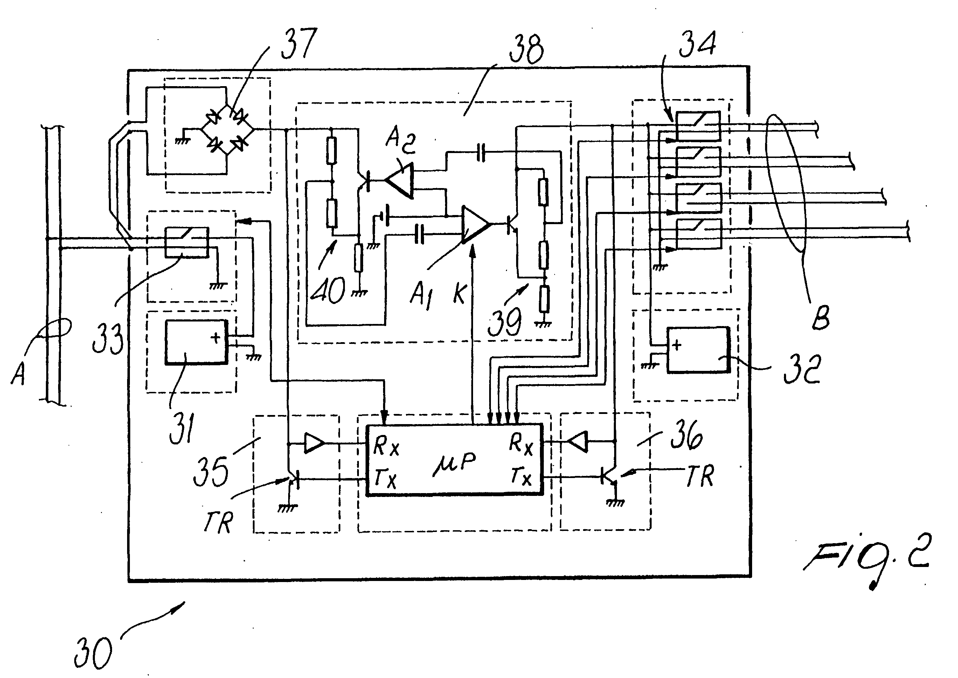

Figure 2 is an enlarged-scale view of a detail of Figure 1, illustrating in greater detail the coupling component interposed between the two buses of the system.

In the drawings, the reference numeral 10 generally designates a plurality of outdoor stations, each of which comprises, in a fully known and conventional manner, a set of name-tag call buttons 11, audio transducers 12-13 constituted respectively by a loudspeaker and by a microphone cartridge, and an electric lock 14 (so-called electric door opener).

The reference numerals 20-20' designate one or more pluralities of indoor stations or user intercom sets, which are also constituted by conventional intercom sets provided with a buzzer and with a door opening button for activating the electric lock 14.

According to the present invention, the connection between the outdoor stations 10 and the indoor stations 20, both for selection and for the subsequent transceiving of audio signals, is performed by means of two buses, respectively A and B, each of which comprises two non-polarized conductors C1-C2.

The plurality of outdoor stations 10 is branched off the bus A and the plurality of indoor stations or user intercom sets 20 is branched off the bus B; the bus B is preferably divided into a series of backbones, for example four backbones d1...d4, which facilitate the selective disconnection of the system in case of malfunction.

A circuit component 30 is interposed between the bus A and the bus B and acts as a coupling device between the outdoor stations 10 and the indoor stations 20. The coupling component 30 is provided with electronic and audio circuits which allow it to perform the following substantial functions: supplying the two buses A and B connected thereto, receiving and retransmitting in both directions from and onto said buses A-B frames of digital signals for selecting, and answering from, the individual indoor stations 20, allowing the transit of bidirectional audio signals from the bus A to the bus B and vice versa, accordingly allowing conversation between a generic calling outdoor station and a generic called indoor station.

In order to supply power to the buses, the coupling component 30 comprises a first power supply circuit 31 which is associated with the bus A and a second power supply circuit 32 which is associated with the bus B. The power supply circuits are both connected to the corresponding bus with respective audio decoupling circuits 33-34, shown schematically in the figure as an electronic switch, or a plurality of switches in the case of a plurality of bus backbones, which are controlled for opening and closing by a microprocessor µP of the coupling component 30. Actually and typically, the circuits 33-34 include an inductor whose impedance is varied, by means of an active element which acts as a switch, by the microprocessor µP as a function of the operating state of the system in order to assume a value which is close to zero during the inactive steps or during digital data transmission steps, and a high nominal value during audio transmission in order to decouple the buses A and B from the respective power supply circuits 31-32.

For the selection or addressing of the indoor stations 20, each outdoor station 10 comprises a call frame generator (which is known and not shown) which is associated with its name-tag buttons 11, and the coupling component 30 comprises a first data transceiver 35 and a second data transceiver 36 which are associated with the microprocessor µP.

The transceiver 35 comprises on one side an output Rx for receiving data from the bus A and an input Tx for transmitting data over said bus; the output and the input are connected to corresponding pins of the microprocessor µP, and the transceiver is electrically connected to the bus A with a polarity reversal-preventing bridge 37.

Likewise, the transceiver 36 comprises an output Rx for receiving data from the bus B and an input Tx for transmitting data on the same bus B.

Data transmission over both buses occurs in PWM mode, modulating to zero (ground) the voltage of the respective bus. For this purpose, both transceivers 35 and 36 comprise a respective modulation transistor Tr which branches off the respective bus and receives, on its base, a control voltage which is produced by the microprocessor µP and is adapted to saturate said transistor and accordingly short-circuit to the ground the corresponding bus.

In order to compensate for the lack of voltage on the bus during the transmission steps, each device connected to the bus has a flywheel capacitor (not shown) which provides it with the necessary operating voltage.

For audio transmission, the coupling component 30 further comprises an audio circuit 38 for bidirectional audio connection of the two buses. The audio circuit is controlled by an activation command K which is output by the microprocessor µP, and comprises, in a per se known circuit configuration, two operational amplifiers A1-A2 which are mutually and directionally connected to respective output circuits 39-40 of the so-called fork type, which allow the bidirectional transit of said signals; the amplifiers A1-A2 being adapted to regenerate by amplification the audio signals that arrive from both buses.

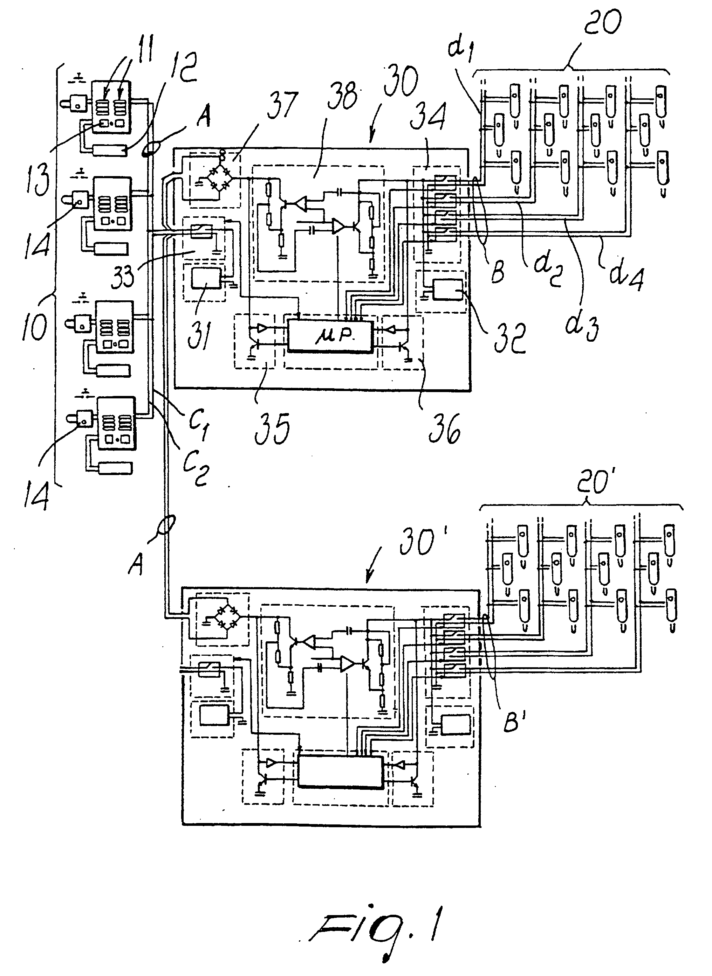

As clearly shown in Figure 1, the described system provides for the installation of two or more coupling components 30 in order to connect to the bus A two or more buses B-B' which comprise additional pluralities of indoor stations 20-20' etcetera. In this case, the additional coupling components such as 30' etcetera are operatively connected to the coupling component 30 in a master-slave relation and the coupling component chosen as master supplies all the devices connected to the bus A and in particular the outdoor stations 10.

The operation of the above-described building intercommunication system is as follows:

The outdoor station 10 that needs to call a generic indoor station 20, following the activation of the corresponding name-tag button 11, transmits over the bus A a corresponding address or call frame. The coupling component 30, or as an alternative the coupling components 30-30' etcetera, receive the address frame from the bus A and send the frame to the microprocessor µP by means of the output Rx of the respective transceiver circuit 35. The microprocessor correspondingly modulates the transistor Tr of the output Tx of its own transceiver circuit 36 so as to retransmit the frame over the bus or buses B; in the illustrated example, over all four backbones of said bus or buses. When the address frame is received, the microprocessor µP also activates the closure of the audio decoupler or decouplers 34 and keeps the bidirectional audio connection circuits 38 off at the same time. All the indoor stations 20 therefore receive the address or call frame, but only the intercom set that is preset to recognize said frame activates its buzzer, simultaneously sending over the bus B a "presence" frame. The coupling device 30 that receives said presence frame by means of its transceiver 36 retransmits it over the bus A by means of the microprocessor µP and the output Tx of its own transceiver 35. When the outdoor station 10 receives the presence frame (which must arrive within a certain period τ), it enables its audio circuits and transmits an audio enable frame over the bus A. The frame reaches the related microprocessor µP via the transceiver 35 and the microprocessor enables the audio circuit 38 of its coupling component 30 and retransmits the frame over the bus B connected thereto so that the indoor station 20 that receives the frame in turn enables its own audio circuit, at the same time transmitting a "busy" signal to the coupling device 30. From this time onward the conversation between the calling outdoor station and the called indoor station can begin.

From the above description it is evident that the building intercommunication system according to the invention is subjected to preliminary programming, which is meant to provide a correlation between the outdoor stations 10 and the indoor stations 20, associating the latter with the corresponding name-tag buttons 11 of the outdoor stations.

For this purpose and according to the invention, each indoor station 20 is provided with a local microprocessor with which an EEPROM memory (not shown) is associated. The memory contains the identification code of the intercom set being considered, which is generated by the outdoor station during programming. The programming can therefore be performed by a single operator and consists in sequentially reserving name-tag buttons to be associated with the various indoor stations and in then going, in the same sequential order, to the indoor stations in order to terminate the correlation, which is indicated by a confirmation tone.

Without altering the concept of the invention, the details of execution and the embodiments may of course be altered extensively with respect to what has been described and illustrated by way of non-limitative example without thereby abandoning the scope of the invention.

The disclosures in Italian Patent Application No. TO98A000901 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A building intercommunication system with digital calling, having a plurality of outdoor stations (10) and a plurality of indoor stations (20), **characterized in that** it comprises means for connection between the outdoor stations and the indoor stations, said means being constituted by at least two buses (A-B), each bus comprising two non-polarized conductors (C1-C2), from which buses (A-B) the plurality of outdoor stations (10) and the plurality of indoor stations (20) branch off respectively, and by at least one coupling component (30) which is interposed between said at least two buses and comprises: circuit means (31-33, 32-34) for separately supplying the two buses (A-B), electronic means (35-36-µP) adapted to receive and retransmit in both directions, from and onto said buses, frames of digital signals for selecting, and for answering from, the individual indoor stations (20); and adapted to enable an audio circuit (38) which resides within the coupling component and allows the bidirectional travel of the audio signals from one bus to the other (A-B) and accordingly from the calling outdoor station (10) to the called indoor station (20) and vice versa.

2. The building intercommunication system according to claim 1, **characterized in that** said coupling component (30) comprises individual power supply circuits (31-32) for said at least two buses (A-B) and **in that** said circuits (31-32) are connected to the respective buses with corresponding audio decoupling devices (33-34) interposed, said decoupling devices being subjected to activation and deactivation commands.

3. The building intercommunication system according to claim 1, **characterized in that** said electronic means that reside in the coupling component (30) comprise, for the bidirectional transit of the digital signals, a microprocessor (µP) which cooperates with two transceivers (35-36), each of which is operatively connected to a respective bus (A-B) of said at least two buses, and **in that** each transceiver receives from the respective bus (A or B) a frame of signals, which it retransmits to the other bus (B or A), and retransmits over the respective bus (A-B) the frame of signals that it receives from said other bus (B-A).

4. The building intercommunication system according to claim 3, **characterized in that** said transceivers (35-36) comprise, for retransmitting the frame of signals arriving from said other bus (A-B), a transistor (TR) which, under the control of a microprocessor (µP), modulates the voltage of the bus so as to correspond to said signal frame.

5. The building intercommunication system according to claim 4, **characterized in that** the frame of signals is transmitted over both buses in PWM mode, modulating to zero (ground) the voltage of the corresponding bus.

6. The building intercommunication system according to claim 1, **characterized in that** said electronic means that reside in the coupling component (30) comprise, for the bidirectional transit of audio signals from one bus to the other (A-B), an audio circuit (38) controlled by an activation command (K) which is output by said microprocessor (µP) and comprises two operational amplifiers (A1-A2) which are mutually and directionally connected to respective output circuits (39-40) of the fork type which allow bidirectional transit of said audio signals.

7. The building intercommunication system according to claim 1, **characterized in that** it comprises two or more coupling components (30-30') for connecting one of the buses (A), which comprises said plurality of outdoor stations (10), two or more buses (B-B') which correspondingly comprise two or more pluralities of indoor stations (20-20'); **in that** said coupling components (30-30') are mutually connected in a master-slave arrangement; and **in that** the master coupling component (30) supplies said one of the buses (A) which comprises the plurality of outdoor stations (10).

8. The building intercommunication system according to claim 1, **characterized in that** said bus (B) from which the plurality of indoor stations (20) branch off is divided into two or more backbones.

9. The building intercommunication system according to claim 1, **characterized in that** each indoor station (20) or intercom set comprises a local microprocessor with which an EEPROM memory is associated, and **in that** said memory contains the identification code of the set (20) being considered, generated by the outdoor station (10) during programming.

10. The building intercommunication system according to claim 1, comprising one or more outdoor stations (10) for calling and selective voice conversation with a plurality of indoor stations (20) or user intercom sets and for the activation, on the part of said indoor stations, of an electric lock.

## Patentansprüche

1. Gegensprechanlage für Gebäude mit digitaler Ruffunktion, mit einer Vielzahl von Außenstationen (10) im Freien und einer Vielzahl von Innenstationen (20) im Gebäudeinneren, **dadurch gekennzeichnet, dass** sie Einrichtungen zur Verbindung zwischen den Außenstationen und den Innenstationen aufweist, wobei die Einrichtungen aus mindestens zwei Busleitungen (A-B) bestehen, wovon jede Busleitung zwei nicht-polarisierte Leiter (C1-C2) aufweist, wobei die Vielzahl von Außenstationen (10) und die Vielzahl von Innenstationen (20) jeweils von den Busleitungen (A-B) abzweigen, sowie aus mindestens einem Koppelteil (30), das zwischen die mindestens zwei Busleitungen geschaltet ist und folgendes aufweist: Schaltungseinrichtungen (31-33, 32-34) zur separaten Versorgung der beiden Buslinien (A-B), elektronische Einrichtungen (35-36-µP), die zum Empfangen und zur erneuten Aussendung von Datenpaketen mit digitalen Signalen zur Auswahl und Abfrage der einzelnen Innenstationen von und zu den Busleitungen in beiden Richtungen ausgelegt sind, und die zur Aktivierung einer Fernsprechschaltung (38) ausgelegt sind, welche innerhalb des Koppelteils angeordnet ist und die Übermittlung der Tonsignale in zwei Richtungen von der einen Busleitung zur anderen (A-B) und dementsprechend von der anrufenden Außenstation (10) zur angerufenen Innenstation (20) und umgekehrt ermöglicht.

2. Gegensprechanlage in Gebäuden nach Anspruch 1, **dadurch gekennzeichnet, dass** das Koppelteil (30) einzelne Stromversorgungsschaltungen (31-32) für die mindestens zwei Busleitungen (A-B) aufweist, und dass die Schaltungen (31-32) mit den jeweiligen Busleitungen mit entsprechenden zwischengeschalteten Tonentkopplungsvorrichtungen (33-34) verbunden sind, wobei die Entkopplungsvorrichtungen mit Befehlen zur Aktivierung und Deaktivierung ansteuerbar sind.

3. Gegensprechanlage in Gebäuden nach Anspruch 1, **dadurch gekennzeichnet, dass** die elektronischen Einrichtungen, die in dem Koppelteil (30) vorgesehen sind, für die Übertragung der digitalen Signale in zwei Richtungen einen Mikroprozessor (µP) umfasst, der mit zwei Transceivern (35-36) zusammenwirkt, von denen jeder wirksam mit einer jeweiligen Busleitung (A-B) der mindestens zwei Busleitungen verbunden ist, und dass jeder Transceiver von der jeweiligen Busleitung (A oder B) ein Signalpaket empfängt, das er dann zur anderen Busleitung (B oder A) erneut aussendet, und über die jeweilige Busleitung (A-B) das Paket mit Signalen erneut übermittelt, das er von der anderen Busleitung (B-A) empfängt.

4. Gegensprechanlage in Gebäuden nach Anspruch 3, **dadurch gekennzeichnet, dass** die Transceiver (35-36) zur erneuten Übertragung des Pakets mit Signalen, das von der anderen Busleitung (A-B) eingeht, einen Transistor (TR) aufweisen, der unter Ansteuerung durch einen Mikroprozessor (µP) die Spannung der Busleitung in der Weise moduliert, dass eine Entsprechung zum Signalpaket gegeben ist.

5. Gegensprechanlage in Gebäuden nach Anspruch 4, **dadurch gekennzeichnet, dass** das Paket mit Signalen über beide Busleitungen im PBM-Modus übertragen wird, wobei die Spannung der entsprechenden Busleitung auf Null (Erdung) moduliert wird.

6. Gegensprechanlage in Gebäuden nach Anspruch 1, **dadurch gekennzeichnet, dass** die elektronischen Einrichtungen, die in dem Koppelteil (30) vorgesehen sind, für die Übertragung von Telefoniesignalen von der einen Busleitung zur anderen (A-B) in zwei Richtungen eine Telefonieschaltung (38) aufweisen, die mittels eines Aktivierbefehls (K) angesteuert wird, den der Mikroprozessor (µP) ausgibt, sowie zwei Operationsverstärker (A1-A2) umfassen, die mit den jeweiligen Ausgangsschaltungen (39-40) in Gabelanordnung mit einander und direktional verbunden sind, welche die Übermittlung der Telefoniesignale in zwei Richtungen ermöglichen.

7. Gegensprechanlage in Gebäuden nach Anspruch 1, **dadurch gekennzeichnet, dass** sie zwei oder mehrere Koppelteile (30-30') zur Verbindung einer der Busleitungen (A), welche die Vielzahl von Außenstationen umfasst, von zwei oder mehr Busleitungen (B-B'), welche dementsprechend zwei oder mehr Gruppen von Innenstationen (20-20') umfassen, aufweist; dass die Koppelteile (30-30') gegenseitig in Master-Slave-Anordnung geschaltet sind, und dass das Master-Koppelteil (30) die eine der Busleitungen (A) versorgt, welche die Vielzahl von Außenstationen (10) umfasst.

8. Gegensprechanlage in Gebäuden nach Anspruch 1, **dadurch gekennzeichnet, dass** die Busleitung (B), von welcher die Vielzahl von Innenstationen (20) abzweigt, in zwei oder mehr Backbone-Netzwerke unerteilt ist.

9. Gegensprechanlage in Gebäuden nach Anspruch 1, **dadurch gekennzeichnet, dass** jede Innenstation (20) bzw. jedes Wechselsprechgerät einen lokalen Mikroprozessor aufweist, dem ein EEPROM-Speicher zugeordnet ist, und dass der Speicher den Identifizierungskode des jeweiligen Geräts (20) enthält, der während der Programmierung von der Außenstation (10) erzeugt wird.

10. Gegensprechanlage in Gebäuden nach Anspruch 1, **dadurch gekennzeichnet, dass** sie eine oder mehrere Außenstationen (10) zum Anrufen und zur selektiven wechselseitigen Sprechverbindung mit einer Vielzahl von Innenstationen (20) bzw. Wechselsprechgeräten des Benutzers sowie zur Aktivierung auf der Seite der Innenstationen ein elektrisches Schloss aufweist.

## Revendications

1. Système d'intercommunication pour immeubles avec appel numérique (digital), ayant une pluralité de postes extérieurs (10) à l'immeuble et une pluralité de postes intérieurs (20) à l'immeuble, **caractérisé en ce qu'**il comprend des moyens de connexion entre les postes extérieurs et les postes intérieurs, lesdits moyens étant constitués par au moins deux bus (A-B), chaque bus comprenant deux conducteurs non polarisés (C1-C2), à partir desquels bus (A-B) se dérivent respectivement la pluralité de postes extérieurs (10) et la pluralité de postes intérieurs (20), et par au moins un composant de couplage (30) qui est placé entre lesdits au moins deux bus et qui comprend: des circuits (31-33, 32-34) pour alimenter séparément les deux bus (A-B), des moyens électroniques (35-36-µP) adaptés pour recevoir et retransmettre dans les deux directions, depuis et vers lesdits bus, des pluralités de signaux numériques pour sélectionner les postes intérieurs individuels (20) et pour répondre à partir de ceux-ci; et adaptés pour mettre en état un circuit audio (38) qui réside à l'intérieur du composant de couplage et permet le déplacement bidirectionnel des signaux audio d'un bus à l'autre (A-B) et par conséquent depuis le poste extérieur appelant (10) vers le poste intérieur appelé (20) et vice-versa.

2. Système d'intercommunication pour immeubles selon la revendication 1, **caractérisé en ce que** le composant de couplage (30) comprend des circuits d'alimentation en courant individuels (31-32) pour lesdits au moins deux bus (A-B) et **en ce que** lesdits circuits (31-32) sont connectés aux bus respectifs avec des dispositifs de découplage audio correspondants interposées (33-34), lesdits dispositifs de découplage étant soumis à des commandes d'activation et de désactivation.

3. Système d'intercommunication pour immeubles selon la revendication 1, **caractérisé en ce que** lesdits moyens électroniques qui résident dans le composant de couplage (30) comprennent, pour le transit bidirectionnel des signaux numériques, un microprocesseur (µP) qui coopère avec deux émetteurs-récepteurs (35-36), chacun desquels est connecté de façon opérationnelle à un bus respectif (A-B) des dits au moins deux bus, et **en ce que** chaque émetteur-récepteur reçoit depuis le bus respectif (A ou B) une pluralité de signaux, qui est retransmise à l'autre bus (B ou A), et retransmet au bus respectif (A-B) la pluralité de signaux qu'il reçoit du dit autre bus (B-A).

4. Système d'intercommunication pour immeubles selon la revendication 3, **caractérisé en ce que** lesdits émetteurs-récepteurs (35-36) comprennent, pour la retransmission de la pluralité de signaux arrivant du dit autre bus (A-B), un transistor (TR) qui, sous la commande d'un microprocesseur (µP), module la tension du bus de façon à correspondre à ladite pluralité de signaux.

5. Système d'intercommunication pour immeubles selon la revendication 4, **caractérisé en ce que** la pluralité de signaux est transmise aux deux bus en mode de modulation d'impulsions en durée, modulant à zéro ( masse) la tension du bus correspondant.

6. Système d'intercommunication pour immeubles selon la revendication 1, **caractérisé en ce que** les moyens électroniques qui résident dans le composant de couplage (30) comprennent, pour le transit bidirectionnel des signaux audio d'un bus vers l'autre (A-B), un circuit audio (38) commandé par une commande d'activation (K) qui est débitée par ledit microprocesseur (µP) et comprend deux amplificateurs opérationnels (A1-A2) qui sont mutuellement et de façon directionnelle connectés aux circuits de sorties respectifs de type à branche (39-40) qui permettent le transit bidirectionnel des dits signaux audio.

7. Système d'intercommunication pour immeubles selon la revendication 1, **caractérisé en ce qu'**il comprend deux ou plusieurs composants de couplage (30-30') pour connecter un des bus (A), qui comprend ladite pluralité de postes extérieurs (10), deux ou plusieurs bus (B-B) qui comprennent de façon correspondante deux ou plusieurs pluralités de postes intérieurs (20-20); **en ce que** lesdits composants de couplage (30-30') sont mutuellement connectés en un agencement maître asservisseur-dispositif asservi; et **en ce que** le composant de couplage maître (30) alimente ledit un des bus (A) qui comprend la pluralité de postes extérieurs (10).

8. Système d'intercommunication pour immeubles selon la revendication 1, **caractérisé en ce que** ledit bus (B) depuis lequel se dérive la pluralité de postes intérieurs (20) est divisé en deux ou plusieurs dorsales.

9. Système d'intercommunication pour immeubles selon la revendication 1, **caractérisé en ce que** chaque poste intérieur (20) ou ensemble d'intercom comprend un microprocesseur local auquel une mémoire EEPROM est associée, et **en ce que** ladite mémoire contient le code d'identification de l'ensemble (20) considéré, lequel code est généré par le poste extérieur (10) pendant la programmation.

10. Système d'intercommunication pour immeubles selon la revendication 1, comprenant un ou plusieurs postes extérieurs (10) pour l'appel et la conversation vocale sélective avec une pluralité de postes intérieurs (20) ou avec des ensembles d'intercom d'un utilisateur, et pour l'activation, depuis lesdits postes intérieurs, d'un verrouillage électrique.
